# NEUE EUROPÄISCHE PATENTSCHRIFT

(11) **EP 0 455 211 B2**
(45) Veröffentlichungstag und Bekanntmachung des Hinweises auf die Entscheidung über den Einspruch: **14.06.2000**
(45) Hinweis auf die Patenterteilung: 05.04.1995
(21) Anmeldenummer: 91106990.4
(22) Anmeldetag: 30.04.1991
(51) Int. Cl.: C09D 5/00, C09D 127/04, C09D 101/04, B05D 7/02

(54) **Verfahren zur Effekt-Lackierung von Polypropylensubstraten**
Process of effect-coating of polypropylene substrates
Procédé pour peinture d'effet de revêtement de substrats de polypropylène

(30) Priorität: 03.05.1990 DE 4014212
(43) Veröffentlichungstag der Anmeldung: 06.11.1991
(73) Patentinhaber: Herberts Gesellschaft mit beschränkter Haftung, 42285 Wuppertal (DE)
(72) Erfinder: Gruner, Christian, Dr., W-5030 Hürth (DE); Santos, Carlos de Oliveira, W-5000 Köln 80 (DE)
(74) Vertreter: Gille Hrabal Struck Neidlein Prop Roos

(56) Entgegenhaltungen:
- FR-A- 2 606 417
- US-A- 3 639 147
- US-A- 4 725 640
- DATABASE WPIL, NO. 87-025 170, DERWENT PUBLICATIONS LTD., London, GB; & JP-A-61 281 168
- J.P. GOULIN, "Eastman chlorinated polyolefins, an update of their use in coatings for polyolefin", Double Liaison-Chimie des Peintures, Nr. 349, November 1984, S. XXI-XXIV
- Publication No. GN-350B der Eastman Kodak Company (Juli 1987)
- Paint and surface coatings, Herausgeber R. Lambourne, 1987, S. 459-462
- Derwent Abstract JP-A-5 8087-132
- Brochure of Eastman Cellulose Acetate Butyrate for Coatings, publication no. E-101C, April 1982
- "PROPERTIES", Eastman, Zusammensetzung von CAB 381-2

## Beschreibung

Die Erfindung betrifft verfahren zur Beschichtung von aus Polypropylen bestehenden oder Polypropylen enthaltenden Kunststoffsubstraten unter Erzeugung von Effektfarbtönen. Die Erfindung betrifft auch die die Verwendung eines Effekt-Basislacks in derartigen Verfahren.

In der Industrie werden heute zunehmend Formteile auf Kunststoffbasis verwendet, die zusammen mit Metallteilen eingesetzt werden sollen und einer Lackierung bedürfen. Dies gilt insbesondere für Kraftfahrzeugteile, die in zunehmenden Maße aus Kunststoffen angefertigt werden, wie Stoßfängerverkleidungen, Spoiler, Schweller, Radhausverkleidungen, und seitliche Verkleidungen bzw. Schutzleisten. Für derartige Formteile werden in zunehmendem Maße Kunststoffe mit einem Polypropylengehalt, sogenannte Polypropylenblends, mit einem Polypropylengehalt von mehr als 50 Gew.%, bezogen auf den Kunststoffanteil, verwendet. Solche Teile werden derzeit in Uni-Kontrastfarbtönen, in Uni-Karosseriefarbtönen und in Effekt-Karosseriefarbtönen sowie in Effekt-Kontrastfarbtönen beschichtet. Derartige Beschichtungen sind jedoch nicht unproblematisch.

Lacke für Uni-Farbtöne sowie Effekt-Kontrastfarbtöne müssen so formuliert werden, daß sie folgenden Anforderungen genügen: gute Haftung des Decklacksystems (Uni-Decklack bzw. Effekt-Basislack), direkt auf der Kunststoffoberfläche und zwar ohne chemische Vorbehandlung bei niedrigem Elastizitätsmodul von 〈900 und mit chemischer Vorbehandlung, nämlich beispielsweise Beflammen, Corona- und Plasmavorbehandlung, bei vielen Polypropylenblends mit einem Elastizitätsmodul von〉 600.

Bisher war es auf dem Kraftfahrzeugsektor nicht möglich bei Lacken für Polypropylenkunststoffteile in Effekt-Karosseriefarbtönen, d.h. in solchen Lacken, die Effektpigmente, wie Metallpigmente oder Pigmente auf der Basis von Glimmerplättchen enthalten und die Farbübereinstimmung mit den Lacken zur Beschichtung von Automobilkarossen aufweisen müssen, ohne vorherige Grundierung des Kunststoffteils vor der Decklackierung zu arbeiten.

Es sind Lackrezepturen für Decklacke und Basislacke mit Haftung auf Polyolefin-Oberflächen, wie Polypropylenblends bekannt, denen chlorierte Polyolefine zugesetzt wurden. Derartige Lackzusammensetzungen sind jedoch nicht für eine optimale Abstimmung der Effekt-Farbtonpalette mit entsprechend lackierten Metallteilen geeignet. So ist es mit derartigen Lacken bisher nicht möglich gewesen bestimmte flop-Effekte zu erzielen, d.h. bestimmte Farbtöne unter verschiedenen Lichteinfalls- und Betrachtungswinkeln sowie mit verschiedener Helligkeit und Brillanz zu erreichen. Die Ursache hierfür ist die negative Beeinflussung der geometrischen Ausrichtung der für die Effektlackierung verantwortlichen Effektpigmente, wie plättchenförmige Metallteilchen (Metallbronzen), durch die Zusätze von chlorierten Polyolefinen. Bisher konnten keine Bindemittel-Kombinationen gefunden werden, die einerseits den gewünschten flop-Effekt, bzw. eine gute Orientierung der Effektpigmente, im Vergleich mit entsprechenden Farbtönen auf Metalloberflächen bieten und zudem eine gute Haftung auf Kunststoffoberflächen, insbesondere Polypropylenblend-Oberflächen, gewährleisten.

Aufgabe der vorliegenden Erfindung ist die Bereitstellung eines Verfahrens zur Effect-Lackierung von Kunststoffsubstraten, die Polypropylen enthalten oder aus Polypropylen bestehen. Diese Effekt-Lackierung soll einerseits eine gute Haftung auf dem Kunststoff-Untergrund ermöglichen und andererseits eine gute Ausrichtung der Effektpigmente zur Erzielung eines guten flop-Effekts ermöglichen, so daß eine breite Effekt-Farbtonpalette ermöglicht wird, die eine Farbabstimmung bzw. Farbübereinstimmung mit Karosseriefarben, wie sie auf Metallteilen eingesetzt werden, erlaubt.

Es hat sich gezeigt, daß diese Aufgabe gelöst werden kann durch das einen Gegenstand der Erfindung bildende Verfahren zur Effekt-Lackierung von bis zu 100 Gew.- % aus Polypropylen bestehenden Kunststoffsubstraten mit chlorierte Polyolefine und Effektpigmente enthaltenden Lacken, das dadurch gekennzeichnet ist, daß man direkt auf das Kunststoffsubstrat einen Effekt-Basislack, enthaltend
- 5 - 35 Gew. -%: eines oder mehrerer physikalisch trocknender Bindemittel, die nach Trocknung unter 50°C keine klebrigen Eigenschaften mehr vermitteln, auf der Basis von Polyester- und/oder Acrylharzen,
- 0,5 - 15 Gew.- %: eines oder mehrerer chlorierter Polyolefine mit einem Chlorgehalt von 10 - 45 Gew. - % bezogen auf den Festkörper der chlorierten Polyolefine, und mit einem Molekulargewicht von 7000 bis 130000,
- 0,5 - 15 Gew.-%: Celluloseacetobutyrat mit einem Acetylgehalt von 2 bis 20 Gew.-% und einem Butyrylgehalt von 30 - 55 Gew.-%,
- 0,1 - 15 Gew.-%: Effektpigment,
- 0 - 20 Gew.-%: Farbpigment und
- 50 - 87 Gew.- %: Lösemittel
aufbringt, und nach kurzem Ablüften mit einem Klarlack überlackiert und anschließend gemeinsam unter Erwärmen aushärtet.

Der erfindungsgemäß eingesetzte Basislack enthält als Bindemittel neben chlorierten Polyolefinen und Celluloseacetobutyrat ein oder mehrere Bindemittel, bei denen es sich um solche mit physikalischem Trocknungsvermögen handelt. Unter dem physikalischen Trocknungsvermögen ist zu verstehen, daß die Bindemittel in der Zusammensetzung nach Abgabe der Lösemittel aus dem Lackfilm bei Trocknung unter 50°C dem Lackfilm keine klebrigen Eigenschaften mehr vermitteln. Insbesondere handelt es sich bei den physikalisch trocknenden Bindemitteln um polare Bindemittel, denen beispielsweise Estergruppierungen oder Methylolethergruppierungen einen polaren Charakter verleihen. Bindemittel dieser Art sind dem Fachmann geläufig; es handelt sich um übliche Bindemittel, wie sie als Lackrohstoffe im Handel erhältlich sind. Es handelt es sich um Polyester- und Acrylharze. Derartige Bindemittel können allein oder im Gemisch eingesetzt werden. Es können ferner Melaminharze oder Mikrogele mitverwendet werden, wobei die Melaminharze bei niedriger Trocknungstemperatur auch eine geringe Vernetzungstendenz aufweisen können.

Die erfindungsgemäß eingesetzten chlorierten Polyolefine weisen einen Chlorgehalt von 10-45, bevorzugt 15-35 Gew.% auf. Ihr Molekulargewicht beträgt 7000 bis 130000. Derartige chlorierte Polyolefine sind dem Fachmann geläufig und im Handel erhältlich. Sie können beispielsweise durch Einwirken von elementarem Chlor auf Polymerisationsprodukte von Olefinen erhaltenen werden.

Ein wesentlicher Bestandteil der Effekt-Basislacke ist der Gehalt von Celluloseacetobutyrat. Es hat sich gezeigt, daß zur Erzielung einer guten Ausrichtung der Effektpigmente sowie für eine gute Verträglichkeit mit den chlorierten Polyolefinkomponenten besonders bevorzugt ein Celluloseacetobutyrat eingesetzt wird, dessen Acetylgehalt bei 2-20 Gew.%, bezogen auf das Festharz, und dessen Butyrylgehalt 30-55 Gew.% bezogen auf das Festharz beträgt. Der Anteil an Celluloseacetobutyrat in dem erfindungsgemäß verwendeten Effekt-Basislack beträgt zwischen 0,5 und 15 Gew.% , bevorzugt 2-10 Gew.%, und ist abhängig von der Höhe der geforderten Brillianz und der Stärke des geforderten flop-Effekts (Stärke der Farb- und Helligkeitsunterschiede der Effektlackierung, beispielsweise der Metalliclackierung unter verschiedenen Betrachungswinkeln).

Als Effektpigmente können in den Basislacken beispielsweise Metallicpigmente oder Effektpigmente auf der Basis von Glimmerplättchen bzw. Micaplättchen eingesetzt werden, wie sie z.B. auf dem Gebiet der Kraftfahrzeuglackierung üblich sind.

Neben den Effektpigmenten können die Effekt-Basislacke auch übliche Farbpigmente enthalten. Somit ist es möglich, Pigmentierungen zu erzielen, die auf dem Kraftfahrzeugsektor beispielsweise in Karosseriebasislacken eingesetzt werden.

Die erfindungsgemäß verwendeten Effekt-Basislacke weisen einen Lösemittelgehalt von 50-87 Gew.% auf. Es können übliche Lack-Lösemittel eingesetzt werden, wie aromatische Lösemittel, beispielsweise Xylol, Ester, beispielsweise Butylacetat, Ketone, Ether und/oder Ester von Glykolen, wie Ether/Ester des Propylenglykols.

Die erfindungsgemäß verwendeten Effekt-Basislacke sind besonders geeignet für die Lackierung von Kunststoffteilen, insbesondere Kraftfahrzeugteilen, die entweder aus Polypropylen bestehen oder einen Polypropylengehalt aufweisen. Derartige Polypropylenblends weisen bevorzugt einen Gehalt von 40-100 Gew.% Polypropylen und von 0-60 Gew.% beliebiger anderer Polymerer auf, wie sie z.B. zur Herstellung von Polypropylen enthaltenden Kunststoffsubstraten üblicherweise eingesetzt werden.

Besonders geeignet ist das Verfahren zur Beschichtung von Kraftfahrzeugteilen aus derartigen Kunststoffen. Durch den Einsatz der Basislacke ergibt sich dabei der Vorteil einer guten Haftung der Lacke auf den Kunststoffsubstraten direkt. Eine Vorlackierung bzw. Grundierung der Kunststoffsubstrate, wie sie beim Stand der Technik unerläßlich war, ist nicht nötig, eine übliche Grundierung stört aber nicht. Der Auftrag der Effekt-Basislacke kann ohne Vorbehandlung aber auch nach Vorbehandlung des Polypropylen enthaltenden Substrats erfolgen, z.B. Vorbehandlung durch Beflammen, Corona- oder Plasmabehandlung. Als weiterer Vorteil der erfindungsgemäßen Basislacke ergibt sich die Möglichkeit einer weitgehenden Abstimmung des erzielten Effekt-Farbtones mit dem von Lackierungen auf Metallteilen, die zusammen mit den lackierten Kunststoffteilen eingesetzt werden sollen, beispielsweise im Kraftfahrzeugbau. Durch die spezielle Zusammensetzung der Effekt-Basislacke wird die Orientierung der Effektpigmente in den Lackzusammensetzungen nicht beeinträchtigt, so daß ein ausgezeichneter flop-Effekt sowie die Abstimmung verschiedener Helligkeits- und Brillanzeffekte möglich sind.

Die erfindungsgemäß verwendeten Effekt-Basislacke können in üblicher Weise aufgetragen werden, beispielsweise durch Spritzen, wie die sogenannte Hochdruckspritzlackierung. Die Schichtdicken hängen vom gewünschten Effekt ab; sie variieren beispielsweise von 10 bis 20 µm (trocken).

Auf die Basislacke kann nach kurzem Ablüftem, z.B. bei einer Temperatur zwischen 20 und 50°C, ein Klarlack aufgebracht werden.

Als Klarlacke werden übliche witterungsbeständige Klarlacke verwendet. Geeignet dafür sind beispielsweise isocyanathärtende 2-Komponentenklarlacke auf der Basis von Polyester- oder Acrylharzen. Derartige Lacksysteme sind üblich und dem Fachmann bekannt. Beispiele werden beschrieben in der Druckschrift "Produkte für die Lackindustrie" Bd. 2, Desmodur/Desmophen der Firma Bayer sowie in DE-PS 728 981, DE-PS 756 058, DE-PS 953 012, Angewandte Chemie, Teil A, S. 257, Jahrgang 59 (1947) von 0. Bayer und Jahrgang 62 (1950) S. 57, von 0. Bayer, sowie in Houben Weyl "Methoden der organischen Chemie" Bd. 14/2, Makromolekulare Stoffe, S. 57, Polyurethane, bearbeitet von E. Müller.

Die folgenden Beispiele erläutern die Erfindung. Prozentangaben beziehen sich, sofern nichts anderes angegeben, auf das Gewicht.

### Beispiel 1

Herstellung eines Effekt-Basislackes:
24,0 % einer 50 Gew.%igen Lösung eines Polyesterharzes (Handelsprodukt Setal 90173 SS-50) und 1,2 % blaues Farbpigment (Handelsprodukt Heliogenblau L 6930) wurden 5 Minuten im Dissolver verrührt. Das erhaltene Gemisch wurde mit 8,0 % Butylacetat versetzt und 45 Minuten in einer Perlmühle vermahlen. Anschließend wurden 16 % einer 25 Gew.%igen Lösung eines Chlorpolyolefins in Xylol (mit einem Chlorgehalt von etwa 30 Gew.%) unter Rühren zugegeben. Dann wurden 5,0 % Celluloseacetobutyrat (Handelsprodukt Krahn/Eastman, Acetobutyrat 381-2), die vorher mit 30,0 % Butylacetat gelöst wurden, unter Rühren zugesetzt. Getrennt davon wurden 0,8 % Effektpigment (Metallicpigment) in 12,0 % Xylol angeteigt und dann unter Rühren zu dem vorstehenden Gemisch gefügt. Dann wurde mit 3,0 % Butylacetat zur Einstellung der Viskosität auf eine geeignete Lager- und Lieferviskosität versetzt.

### Beispiel 2

A) Lackierung von Kunststoffsubstraten:
   Platten aus Polypropylen und Ethylen-Propylen-Dien-Mischpolymerisat (Anteil Polypropylen: Mischpolymerisat = ca. 75:25 Gew.Teile) werden einer Handreinigung mit Isopropanol unterzogen und mit Druckluft (4-6 bar) abgeblasen, bis sie trocken und staubfrei sind.
   Der Effektlack nach Beispiel 1, eingestellt mit Butylacetat auf eine Applikationsviskosität von 17-20 sec AK 4/20 c (DIN 53 211), wird mit einer Fließbecherpistole mit einer Düse von 1,2 mm unter einem Druck von 4-6 bar aufgebracht. Die Lackierung erfolgt in zwei Spritzgängen von jeweils 7 µm Trockenschichtstärke. Anschließend wird bei Raumtemperatur 8-10 min abgelüftet.
B) Auftrag eines Klarlackes:
   Nach dem Ablüften wird ein handelsüblicher Zweikomponenten-Klarlack auf Acrylbasis (2 K-Standocryl-Klarlack) mit der Fließbecherpistole, mit einer Düse von 1,3 mm, bei einem Druck von 4-6 bar in zwei Spritzgängen aufgetragen. Die erzielte Trockenschichtstärke beträgt 30 µm.
C) Tests:
   Die erhaltenen lackierten Platten werden einer Ofenalterung während 48 Stunden bei 60°C unterzogen. Anschließend wird eine Haftungsprüfung nach DIN 53 151 + Klebeband-Abriß (Tesaband 4651 der Firma Beiersdorf) durchgeführt. Das Gitterschnittbild nach dem Abriß des Klebebandes hat den Kennwert GT O (d.h. es erfolgte keine Enthaftung).
   Nach einem Feuchtwarm-Test von 240 Stunden (DIN 50 017) wurden die Prüflinge hinsichtlich des erhaltenen Blasengrades (DIN 53 209) beurteilt. Der Beurteilungsgrad war 0/0 m/g; es traten keine Blasen auf. Die anschließende erneute Haftungsprüfung (Gitterschnitt + Klebebandabriß) ergab den Wert GT O (d.h. ebenfalls keine Enthaftung).

## Patentansprüche

1. Verfahren zur Effekt-Lackierung von bis zu 100 Gew.-% aus Polypropylen bestehenden Kunststoffsubstraten mit chlorierte Polyolefine und Effektpigmente enthaltenden Lacken, dadurch gekennzeichnet, daß man direkt auf das Kunststoffsubstrat einen Effekt-Basislack, enthaltend
5 - 35 Gew.-% eines oder mehrerer physikalisch trocknender Bindemittel, die nach Trocknung unter 50°C keine klebrigen Eigenschaften mehr vermitteln, auf der Basis von Polyester- und/oder Acrylharzen,
0,5 - 15 Gew.-% eines oder mehrerer chlorierter Polyolefine mit einem Chlorgehalt von 10 - 45 Gew.-% bezogen auf den Festkörper der chlorierten Polyolefine, und mit einem Molekulargewicht von 7000 bis 130000,
0,5 - 15 Gew.-% Celluloseacetobutyrat mit einem Acetylgehalt von 2 bis 20 Gew.-% und einem Butyrylgehalt von 30 - 55 Gew.- %,
0,1 - 15 Gew.- % Effektpigment,
0 - 20 Gew.-% Farbpigment und
50 - 87 Gew.-% Lösemittel
aufbringt, und nach kurzem Ablüften mit einem Klarlack überlackiert und anschließend gemeinsam unter Erwärmen aushärtet.

2. Verfahren nach Anspruch 1, dadurch gekennzeichnet, daß Kraftfahrzeugteile aus Kunststoffen mit einem Polypropylengehalt von bis zu 100 Gew.-% lackiert werden.

3. Verwendung eines Effekt-Basislacks zur Beschichtung von bis zu 100 Gew.-% aus Polypropylen bestehenden Kunststoffsubstraten, enthaltend
5 - 35 Gew.-% eines oder mehrerer physikalisch trocknender Bindemittel, die nach Trocknung unter 50°C keine klebrigen Eigenschaften mehr vermitteln, auf der Basis von Polyester- und/oder Acrylharzen,
0,5 - 15 Gew.-% eines oder mehrerer chlorierter Polyolefine mit einem Chlorgehalt von 10 - 45 Gew.- % bezogen auf den Festkörper der chlorierten Polyolefine, und mit einem Molekulargewicht von 7000 bis 130000,
0,5 - 15 Gew.-% eines Celluloseacetobutyrat mit einem Acetylgehalt von 2 bis 20 Gew.-% und einem Butyrylgehalt von 30 - 55 Gew.-%,
0,1 - 15 Gew.-% Effektpigment,
0 - 20 Gew.-% Farbpigment und
50 - 87 Gew.- % Lösemittel.

4. Verwendung nach Anspruch 3 ohne vorherige Grundierung der Kunststoffsubstrate.

5. Verwendung nach Anspruch 3 oder 4 zur Lackierung von Kraftfahrzeugteilen mit einem Polypropylengehalt von bis zu 100 Gew.-%.

## Claims

1. Process for effect lacquer coating of plastic substrates consisting of up to 100 wt.% of polypropylene with lacquers containing chlorinated polyolefins and effect pigments, characterised in that an effect base lacquer is applied directly onto the plastic substrate, which base lacquer contains
5 -35 wt.% of one or more physically drying binders which after drying at below 50°C no longer impart tackiness, based on polyester and/or acrylic resins,
0.5-15 wt.% of one or more chlorinated polyolefins with a chlorine content of 10-45 wt.% relative to the solids content of the chlorinated polyolefins and with a molecular weight of 7,000 to 130,000,
0.5-15 wt.% of cellulose acetobutyrate having an acetyl content of 2 - 20 wt.% and a butyryl content of 30 - 55 wt.%,
0.1-15 wt.% of effect pigment,
0 -20 wt.% of colouring pigment and
50 -87 wt.% of solvent
and, after briefly flashing-off, the base lacquer is overcoated with a clear lacquer and then together hardened with the application of heat.

2. Process according to claim 1, characterised in that automotive components made from plastics with a polypropylene content of up to 100 wt.% are lacquer coated.

3. Use of an effect base lacquer
for coating plastic substrates consisting of up to 100 wt.% of polypropylene, containing
5 -35 wt.% of one or more physically drying binders which after drying at below 50°C no longer impart tackiness, based on polyester and/or acrylic resins,
0.5-15 wt.% of one or more chlorinated polyolefins with a chlorine content of 10-45 wt.% relative to the solids content of the chlorinated polyolefins and with a molecular weight of 7,000 to 130,000,
0.5-15 wt.% of a cellulose acetobutyrate having an acetyl content of 2 - 20 wt.% and a butyryl content of 30 - 55 wt.%,
0.1-15 wt.% of effect pigment,
0 -20 wt.% of colouring pigment and
50 -87 wt.% of solvent.

4. Use according to claim 3 without prior priming of the plastic substrates.

5. Use according to claim 3 or 4 for lacquer coating automotive components with a polypropylene content of up to 100 wt.%.

## Revendications

1. Procédé pour appliquer un revêtement à effet sur des supports de résines synthétiques consistant en polypropylène en proportions allant jusqu'à 100% en poids à l'aide de peintures contenant des polyoléfines chlorées et des pigments à effet, caractérisé en ce que l'on applique directement sur le support de résine synthétique une peinture de base à effet contenant :
5 à 35% en poids d'un ou plusieurs liants capables d'un séchage physique qui, après séchage à des températures inférieures à 50°C, ne confèrent plus de propriétés collantes, à base de résines de polyesters et/ou de résines acryliques,
0,5 à 15% en poids d'une ou plusieurs polyoléfines chlorées à une teneur en chlore de 10 à 45% en poids, par rapport aux matières solides des polyoléfines chlorées, et à un poids moléculaire de 7000 à 130 000,
0,5 à 15% en poids d'acétobutyrate de cellulose dont la teneur en groupes acétyle est de 2 à 20 % du poids et en groupes butyryle est de 30 à 55 % du poids,
0,1 à 15% en poids d'un pigment à effet,
0 à 20% en poids de pigments colorés et
50 à 87% en poids de solvants,
et après un court séchage à l'air, on recouvre d'un vernis clair et on procède ensuite au durcissement complet en commun à chaud.

2. Procédé selon revendication 1, caractérisé en ce que l'on revêt des pièces de véhicules consistant en résines synthétiques contenant du polypropylène en proportions pouvant aller jusqu'à 100% en poids.

3. Utilisation des peintures de base à effet pour le revêtement de supports de résines synthétiques consistant en polypropylène pour des proportions allant jusqu'à 100% en poids, contenant:
5 à 35% en poids d'un ou plusieurs liants capables d'un séchage physique qui, après séchage à des températures inférieures a 50°C, ne confèrent plus de propriétés collantes, à base de résines de polyesters et/ou de résines acryliques,
0,5 à 15% en poids d'une ou plusieurs polyoléfines chlorées à une teneur en chlore de 10 à 45% en poids, par rapport aux matières solides des polyoléfines chlorées, et à un poids moléculaire de 7000 à 130 000,
0,5 à 15% en poids d'acétobutyrate de cellulose dont la teneur en groupes acétyle est de 2 à 20 % du poids et en groupes butyryle est de 30 à 55 % du poids,
0,1 à 15% en poids d'un pigment à effet,
0 à 20% en poids de pigments colorés et
50 à 87% en poids de solvants.

4. Utilisation selon revendication 3, sans application préalable d'une couche d'apprêt sur les supports de résines synthétiques.

5. Utilisation selon revendication 3 ou 4 pour le revêtement de pièces de véhicules contenant jusqu'à 100% en poids de polypropylène.
